# EUROPÄISCHE PATENTSCHRIFT

(11) **EP 1 481 431 B1**
(45) Veröffentlichungstag und Bekanntmachung des Hinweises auf die Patenterteilung: **12.07.2017**
(21) Anmeldenummer: 03743284.6
(22) Anmeldetag: 06.02.2003
(51) Int. Cl.: H01M 4/86

(54) **KATHODE FÜR DEN EINSATZ BEI HOHEN TEMPERATUREN**
CATHODE FOR USE AT HIGH TEMPERATURES
CATHODE POUR UTILISATION À HAUTE TEMPÉRATURE

(30) Priorität: 01.03.2002 DE 10208882
(43) Veröffentlichungstag der Anmeldung: 01.12.2004
(73) Patentinhaber: Forschungszentrum Jülich GmbH, 52425 Jülich (DE)
(72) Erfinder: AL DAROUKH, Mahmoud, 01187 Dresden (DE); STÖVER, Detlev, 52382 Niederzier (DE); TIETZ, Frank, 52428 Jülich (DE); ULLMANN, Helmut, 01705 Freital (DE); VASHUK, Vladimir, 01069 Dresden (DE)
(86) Internationale Anmeldenummer: PCT/DE2003/000338
(87) Internationale Veröffentlichungsnummer: WO 2003/075377

(56) Entgegenhaltungen:
- EP-A- 0 450 547
- WO-A-94/09521
- DE-A- 19 943 523
- US-A- 4 206 270
- US-A- 5 543 239
- US-A- 5 624 542
- US-A- 6 017 647
- STEELE B C H: "Behaviour of porous cathodes in high temperature fuel cells" SOLID STATE IONICS, NORTH HOLLAND PUB. COMPANY. AMSTERDAM, NL, Bd. 94, Nr. 1, 1. Februar 1997 (1997-02-01), Seiten 239-248, XP004057194 ISSN: 0167-2738
- SAMMES N M ET AL: "PHASE STABILITY AND IONIC CONDUCTIVITY OF DOPED-CEO2/YSZ ELECTROLYTES" ELECTROCHEMICAL SOCIETY PROCEEDINGS, ELECTROCHEMICAL SOCIETY, PENNINGTON, NJ, US, Bd. 97-18, 1997, Seiten 1105-1112, XP009019641 ISSN: 0161-6374 in der Anmeldung erwähnt
- MORI M ET AL: "Dense sintered conditions and sintering mechanisms for alkaline earth metal (Mg, Ca and Sr)-doped LaCrO3 perovskites under reducing atmosphere" SOLID STATE IONICS, NORTH HOLLAND PUB. COMPANY. AMSTERDAM, NL, Bd. 148, Nr. 1-2, 1. Mai 2002 (2002-05-01), Seiten 93-101, XP004351680 ISSN: 0167-2738
- MENG G Y ET AL: "Novel intermediate temperature ceramic fuel cells with doped ceria-based composite electrolytes" SOLID STATE IONICS, NORTH HOLLAND PUB. COMPANY. AMSTERDAM, NL, Bd. 148, Nr. 3-4, 2. Juni 2002 (2002-06-02), Seiten 533-537, XP004361858 ISSN: 0167-2738

## Beschreibung

Die Erfindung betrifft ein oxidisches Material für den Einsatz bei hohen Temperaturen sowie die Verwendung des oxidischen Materials als Kathode in elektrochemischen Festelektrolytzellen, insbesondere in Hochtemperatur-Brennstoffzellen.

### Stand der Technik

Kathodenmaterialien werden eingesetzt in elektrochemischen Zellen, insbesondere in Festelektrolyt-Brennstoffzellen sowie in Elektrolysezellen mit Arbeitstemperaturen von 600 bis 950 °C. Die Materialien, die beim Aufbau solcher Zellen Verwendung finden, müssen den Anforderungen genügen, daß sie sehr gute Eigenschaften für den elektrochemischen Umsatz der Gase an den Elektroden und für den Transport des Stromes bei der Betriebstemperatur der Zelle über viele Temperaturzyklen und über lange Zeiten stabil gewährleisten können.

Es sind verschiedene Materialkompositionen, Technologien und Konstruktionen für den Aufbau von Hochtemperatur-Brennstoffzellen im Labor- und Technikumsmaßstab bekannt. In den vorgenannten elektrochemischen Zellen übernimmt die Kathode die Aufgabe, gasförmigen Sauerstoff aus der Luft in Oxidionen umzuwandeln und zum Elektrolyten zu transportieren. Die bislang eingesetzten Kathodenmaterialien sind zur Gewährleistung eines hohen Gasumsatzes daher regelmäßig als poröse keramische Schichten ausgestaltet. Weiterhin sind sie gute Elektronenleiter, die in der Lage sind, die hohen Ströme abzuführen. Ebenso sind sie gute Oxidionenleiter, die eine große aktive Fläche für den Gasumsatz an der Elektrode zur Verfügung stellen. Bevorzugte Materialien als Kathoden in Zellen mit kubisch stabilisiertem Zirkoniumdioxid (YSZ) als Elektrolyt sind beispielsweise unterschiedlich dotierte Lanthan-Manganite.

Für eine Arbeitstemperatur der Zellen unterhalb von 800 °C werden häufig Elektrolyte mit einer höheren Ionenleitfähigkeit als das vorgenannte stabilisierte Zirkondioxid verwendet, wie beispielsweise dotiertes Cerdioxid. Bei dieser abgesenkten Temperatur (unterhalb von 800 °C) muß auch das Kathodenmaterial eine höhere Aktivität für den Sauerstoffaustausch besitzen. Als dafür geeignete Kathodenmaterialien mit einer guten Aktivität für den vorgenannten mittleren Temperaturbereich wurde in der Literatur schon La (Sr) Fe(Co)O₃₋ₓ oder auch Pb₂Ru₂O₇ vorgeschlagen (siehe N.M.Sammes et al., "Phase stability and ionic conductivity of doped CeO2/YSZ-electrolytes", in: Solid Oxide Fuel Cells V, U. Stimming et al. (eds.), Fifth intern. Symp., Aachen/Germany 1996, Proc. 1997, p. 1105).

In den Oxiden mit Perowskitstruktur der allgemeinen Zusammensetzung ABO₃ konnten durch unterschiedliche Substitutionen auf dem A- und/oder B-Platz sehr gute elektrokatalytische Eigenschaften erzeugt werden. Mit der Verbesserung der elektrischen Leitfähigkeit und der Oxidionendiffusion steigt jedoch nachteilig der thermische Ausdehnungskoeffizient der oxidischen Materialien in der Regel an bis in den Bereich von 15 bis 20*10⁻⁶ K⁻¹, und ihre thermodynamische Stabilität nimmt dabei regelmäßig ab.

Aus EP 0 450 547 A2 ist ein Gasentladungs-Anzeigeelement mit einer Kathode aus einem elektrisch leitfähigen Oxidkomposit bekannt. Dabei werden als Materialien für die Kathode Oxide mit einer Perowskitstruktur, insbesondere mit der Formel (LaM¹)M²O₃ oder (La₁₋ₓM¹ₓ)M²O₃ mit M¹ = Ba oder Sr, M2 = Co, Ni, Fe oder Mn und und x im Bereich von 0,1 bis 0,6, oder einer K₂NiF₄-Struktur mit der Formel (LaM³₎₂M⁴O₄ mit M³ = Ba oder Sr und M⁴ = Cu und/oder Ni offenbart.

DE 199 43 523 A1, US 6,017,647, US 5,543,239 und US 42206,270 beschreiben jeweils Kathoden für eine Hochtemperatur-Brennstoffzelle mit einer perowskitischen Struktur, bzw. mit perowskitischen Anteilen in der Kathode.

Zur Verbesserung der mechanischen Eigenschaften für gemischte Ionen- und Elektronen leitende Keramikmembranen sind Mischungen aus perowskitischen Keramikpulver und Metallpulver aus US 5,624,542 bekannt.

### Aufgabe und Lösung

Aufgabe der Erfindung ist es, eine Kathode für den Einsatz bei hohen Temperaturen, insbesondere für den Einsatz in einer Brennstoffzelle, bereit zu stellen, welche eine hohe Elektronenleitung von 10 bis 100 S/cm und eine Oxidionenleitung ähnlich wie der Elektrolyt aufweist, um schon unterhalb von 800 °C eine gute elektrokatalytische Aktivität zu gewährleisten. Aufgabe der Erfindung ist es zudem, eine Kathode zu schaffen, die gleichzeitig eine gute thermodynamische Stabilität, die ein thermisches Ausdehnungsverhalten ähnlich wie ein Elektrolyt in einer Brennstoffzelle aufweist und die eine hohe Elektronenleitung von 10 bis 100 S/cm und eine Oxidionenleitung ähnlich wie der Elektrolyt aufweist, um schon unterhalb von 800 °C gute elektrokatalytische Aktivität zu gewährleisten.

Die Aufgabe wird gelöst durch eine Kathode umfassend ein oxidisches Material mit der Gesamtheit der Merkmale gemäß Anspruch 1. Vorteilhafte Ausgestaltungen der Kathode ergeben sich aus den jeweils rückbezogenen Ansprüchen.

### Gegenstand der Erfindung

Erfindungsgemäß wird die Aufgabe der Erfindung gelöst durch eine Kathode, die ein oxidisches Material mit einer komplexen Struktur aufweist. Als besonders geeignet haben sich dabei Oxide mit einer Schichtstruktur herausgestellt, die stabilisierend wirken. Durch die Stabilisierung wird die Sauerstoffabgabe beim Erhitzen und die damit verbundene Erhöhung der thermischen Ausdehnung vermieden. Die Oxidionenleitung wird regelmäßig verbessert. Das oxidische Material der Kathode weist zudem eine hohe elektrische Leitfähigkeit (größer als 10 S/cm) und eine vergleichsweise höhere chemische Stabilität, erkennbar an der geringen thermischen Sauerstoffdesorption, als die bisher untersuchten Oxide vom Perowskittyp auf.

Besonders geeignet als Kathodenmaterial sind oxidische Materialien mit der sogenannten K₂NiF₄-Struktur. Bei dieser Schichtstruktur wird eine Schicht mit einer Perowskitstruktur durch eine benachbarte Schicht mit einer anderen Struktur (Zwischenschicht) stabilisiert. Eine als Zwischenschicht geeignete Schicht kann beispielsweise eine NaCl-Struktur aufweisen. Die Abfolge der Schichten kann dabei direkt alternieren (z. B. Perowskit - NaCl - Perowskit - NaCl - etc.) oder auch eine andere Reihenfolge aufweisen (z. B. Perowskit - NaCl - NaCl - Perowskit - NaCl - NaCl etc.). Aus dieser Abfolge ergibt sich auch die allgemeine Formel des erfindungsgemäßen oxidischen Materials. Perowskit-Struktur (ABO₃) plus NaCl-Struktur (AO) ergibt die Schichtstruktur (A₂BO₄). Der A-Platz ist üblicherweise durch ein Seltenerdion (Ln) besetzt. Durch teilweise Substitution des A-Platzes durch ein Erdalkaliion ergibt sich dann die modifizierte Formel gemäß Ln₍₂₋ₐ₎AₐBO_{4-δ}, wobei Ln ein Seltenerdion und A ein Erdalkaliion ist.

Vielfältige Untersuchungen haben gezeigt, dass als oxidische Materialien für die erfindungsgemäße Kathode als geeignete Seltenerdionen (Ln) insbesondere Lanthan, Praseodym, Gadolinium, und als Erdalkaliionen (A) insbesondere Strontium, Calcium, und Barium zu nennen sind. Die Stöchiometrie ergibt regelmäßig für die Kombination von Ln plus A regelmäßig 2 mol, wobei das Mischungsverhältnis dieser beiden Elemente untereinander durch den Parameter a gekennzeichnet wird. Auch Mischungsverhältnisse mit (Ln+A) zwischen 1,6 und 2,0 sind geeignet, soweit sie die K₂NiF₄-Struktur aufweisen. δ bestimmt sich aus der Valenzen der Metalle.

Als eine besonders vorteilhafte Ausgestaltung der Zusammensetzung des komplexen oxidischen Materials für eine Kathode hat sich in Versuchen Lanthan als Seltenerdion (Ln) und Strontium als Erdalkaliion (A) herausgestellt.

Die B-Gitterplätze werden regelmäßig von Metallen eingenommen, von denen insbesondere Eisen, Kobalt, Nickel, Mangan, Kupfer und Chrom einzeln oder im Gemisch als geeignet zu nennen sind.

Es wurde gefunden, dass für verschiedene Metalle (B) jeweils unterschiedliche Bereiche der Zusammensetzung für A-Gitterplätze besonders vorteilhaft für eine Kathode sind.

Die Herstellung der Kathode kann unter anderem wie nachstehend beschrieben erfolgen. Die ausgewählten Oxide und Karbonate werden als Pulver in einer solchen Stöchiometrie gemischt, dass nach dem Glühen die gewünschte Zusammensetzung erhalten wird. Die Mischung wird anschließend bei der Glühtemperatur an Luft geglüht. Es entsteht ein Pulver mit der gewünschten Zusammensetzung und der erforderlichen Schichtstruktur. Aus diesem wird dann eine erfindungsgemäße Kathode hergestellt.

Verwendung findet die erfindungsgemäße Kathode bevorzugt in elektrolytischen Festelektrolytzelle, insbesondere in Brennstoffzellen. Besonders gut geeignet ist das oxidische Material für solche Kathoden, die in einer Hochtemperatur-Brennstoffzelle eingesetzt werden. Die das erfindungsgemäße oxidische Material aufweisenden Kathoden weisen vorteilhaft eine hohe elektrische Leitfähigkeit auf, insbesondere eine Elektronenleitung im Bereich von 10 bis 100 S/cm. Ferner verfügen sie in dem Temperaturbereich zwischen 700 und 1000 °C über eine verbesserte Stabilität, verglichen mit den bislang bekannten Kathoden aus dem Stand der Technik.

### Spezieller Beschreibungsteil

Anhand des folgenden Ausführungsbeispiels und zweier Figuren soll die Erfindung ohne Einschränkung näher erläutert werden.

Ein Gemisch von Seltenerd (Ln)-oxid, Erdalkali (A)-Karbonat und einem Oxid des Metalls B (Übergangsmetall) wird in geeigneten Mengen eingewogen, so dass nach dem Glühen an der Luft durch eine Festkörperreaktion ein Oxid mit der molaren Zusammensetzung entsprechend der Formel Ln₍₂₋ₐ₎AₐBO_{4-δ} entsteht. Untersuchungen haben ergeben, dass die nachfolgend aufgeführten Zusammensetzungen eine Leitfähigkeit größer als 10 S cm⁻¹ in dem Temperaturbereich von 800 bis 1000 °C aufweisen, kombiniert mit einem Ausdehnungskoeffizienten von ca. 10 bis 13*10⁻⁶ K⁻¹, welcher in guter Übereinstimmung ist mit denen der Elektrolytmaterialien.

Geeignete Zusammensetzungen von Oxiden für die erfindungsgemäße Kathode aus oxidischem Material des Typs Ln₍₂₋ₐ₎AₐBO_{4-δ} zeigt die folgende Tabelle. Die Angaben entsprechen der Zusammensetzung nach dem Glühen an Luft bei einer Glühtemperatur Tg(°C) :

| **Ln** | **A** | **a(mol)** | **B** | **T_{g} [°C]** |
|---|---|---|---|---|
| La | Sr | 0,5 bis 1 | Co | 1100 ± 15 |
| La | Sr | 1,1 bis 1,3 | Fe | 1250 ± 15 |
| La | Sr | > O bis 0,7 | Ni | 1300 ± 15 |

Die Glühtemperatur Tg ist für die Herstellung von Pulvern mit der gewünschten Struktur erforderlich. Um aus diesen Pulvern keramische Schichten oder Körper zu sintern, stellt man etwa 50 K höhere Temperaturen ein. Für spezielle Anwendungen kann La insbesondere auch durch Pr oder Gd und Sr durch Ca ersetzt werden. Anstelle eines einzigen Metalls für B ist es auch möglich, eine Metallmischung aus den genannten Übergangsmetallionen zu verwenden. Weiterhin kann der Gitterplatz des (Ln + A) auch leicht unterstöchiometrisch, zum Beispiel (La + A) = 1,7 mol, besetzt sein.

Im folgenden wird die Herstellung einer bevorzugten Zusammensetzung eines komplexen Oxids für eine erfindungsgemäße Kathode beschrieben. Lanthanoxid La₂O₃ (61,68 g), Strontiumkarbonat SrCO₃ (23,94 g) und Nickeloxid NiO (20,21 g) werden gemischt, so dass nach dem Glühen an Luft bei 1300 °C über 10 Stunden die Zusammensetzung La_{1,4}Sr_{0,6}NiO_{4-δ} in einer Menge von 100 g entsteht.

Beim Glühen über eine Dauer von 10 Stunden bei 800 °C in einer Ar/H₂/H₂0-Atmosphäre mit einem Sauerstoffpartialdruck von 10⁻¹¹ Pa bleibt die Verbindung stabil erhalten.
Die elektrische Leitfähigkeit an Luft beträgt 80 S cm⁻¹ bei 800 °C. Die chemische Diffusion der Oxidionen unter diesen Bedingungen beträgt 10⁻⁴ cm² s⁻¹, sie ist damit so groß wie die Oxidionendiffusion im Elektrolytmaterial, was für den Sauerstofftransport durch die gesamte elektrochemische Zelle von Vorteil ist.

Das ebenfalls besonders gut geeignete Material der Zusammensetzung LaSrCoO_{4-δ} weist unter diesen Bedingungen eine noch höhere elektrische Leitfähigkeit von ca. 200 S cm⁻¹ auf. Die elektrische Leitfähigkeit der vorgenannten Oxide ist vom Typ der p-Halbleitung.

Damit sind insbesondere Kathoden, umfassend die vorgenannten oxidischen Materialien, als Kathoden in Hochtemperatur-Brennstoffzellen geeignet.

Zur Verdeutlichung der Erfindungen zeigen
- Figur 1:: Elektrische Leitfähigkeit des oxidischen Materials mit einer K₂NiF₄-Struktur in Abhängigkeit von der Temperatur, und
- Figur 2:: Elektrische Leitfähigkeit des oxidischen Materials mit einer K₂NiF₄-Struktur in Abhängigkeit vom Sauerstoffpartialdruck.

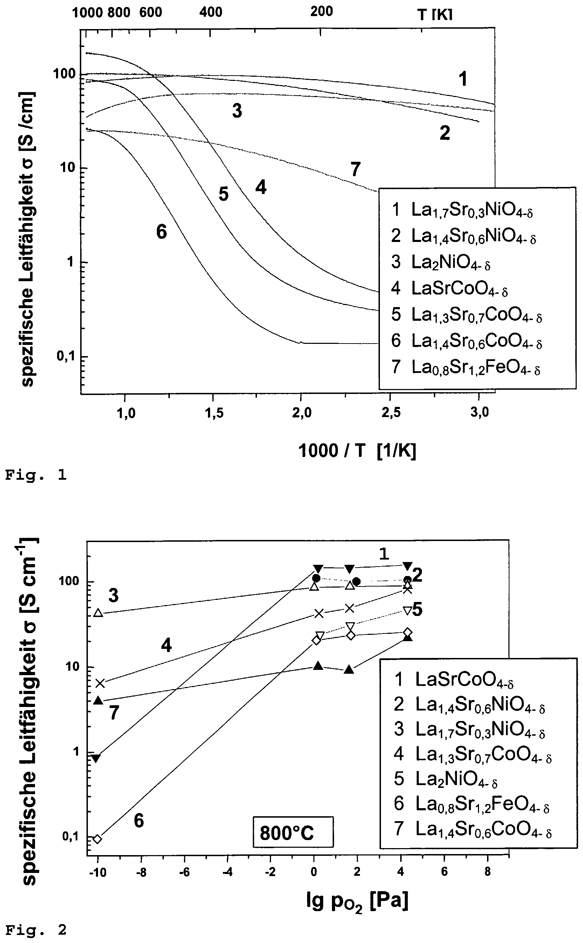

In Fig. 1 ist zu sehen, daß an Luft die Zusammensetzungen 1 bis 7 im Temperaturbereich oberhalb 600 °C spezifische Leitfähigkeiten größer als 10 S pro cm haben, wie sie insbesondere für die Anwendung als Kathodenmaterial erforderlich ist. Die höchsten Werte weisen LaSrCoO_{4-δ} und La_{1,4}Sr_{0,6}NiO_{4-δ}.

In Fig. 2 ist zu sehen, daß bei 800 °C im Bereich des Sauerstoffpartialdrucks der Luft (2*10⁴ Pa) die sieben vorgeschlagenen Zusammensetzungen spezifische Leitfähigkeiten von mehr als 10 S pro cm aufweisen, wie sie insbesondere für Kathodenmaterialien gefordert werden. Die höchsten Werte haben ebenfalls wieder LaSrCoO_{4-δ} und La_{1,4}Sr_{0,6}NiO_{4-δ}.

## Patentansprüche

1. Kathode für den Einsatz bei hohen Temperaturen in einer elektrochemischen Festelektrolytzelle, umfassend ein oxidisches Material, welches bei 700 bis 1000 °C eine elektrische Leitfähigkeit von mehr als 10 S/cm aufweist, und welches eine K₂NiF₄-Schichtstruktur aufweist,
**dadurch gekennzeichnet, dass** das oxidische Material eine Zusammensetzung gemäß der Formel Ln₂₋ₐAₐBO_{4-δ} aufweist, mit
Ln = Seltenerdelement aus der Gruppe (La, Ce, Pr, Nd),
A = Erdalkali aus der Gruppe (Ca, Sr),
B = Übergangsmetall oder Mischung aus Übergangsmetallen
aus der Gruppe (Fe, Co, Mn) und 0 ≤ a < 1,6 und wobei sich δ durch die Valenzen der Metalle bestimmt.

2. Kathode nach Anspruch 1 mit Ln = Lanthan und A = Strontium.

3. Kathode nach einem der Ansprüche 1 bis 2, mit B = Kobalt und 0,5 < a < 1,0.

4. Kathode nach Anspruch 3, mit einer Zusammensetzung gemäß der Formel LaSrCoO_{4-δ}.

5. Kathode nach einem der Ansprüche 1 bis 2, mit B = Eisen und 1,1 < a < 1,3.

6. Verwendung einer Kathode nach einem der vorhergehenden Ansprüche 1 bis 5 in einer Hochtemperatur-Brennstoffzelle.

## Claims

1. Cathode for use at high temperatures in an electrochemical solid electrolyte cell, comprising an oxidic material, which has an electrical conductivity of more than 10 S/cm at 700 to 1000° C and which has a K₂NiF₄ layer structure,
**characterised in that** the oxidic material has a composition according to the formula Ln₂₋ₐAₐbO_{4-δ} with
Ln = rare earth element from the group (La, Ce, Pr, Nd),
A = alkaline earth from the group (Ca, Sr),
B = transition metal or mixture of transition metals
from the group (Fe, Co, Mn) and 0 ≤ a < 1.6 and in which δ is determined by the valences of the metals.

2. Cathode according to claim 1 with Ln = lanthanum and A = strontium

3. Cathode according to one of claims 1 to 2 with B = cobalt and 0.5 < a < 1.0

4. Cathode according to claim 3 with a composition according to the formula **LaSrCoO_{4-δ}**

5. Cathode according to one of claims 1 to 2 with B = iron and 1.1 < a < 1.3

6. Use of a cathode according to one of previous claims 1 to 5 in a high temperature fuel cell

## Revendications

1. Cathode pour utilisation à des températures élevées dans une cellule d'électrolyte solide électrochimique, comprenant un matériau oxydique, qui présente, à une température allant de 700 à 1 000 °C, une conductivité électrique supérieure à 10 S/cm et qui présente une structure stratifiée à base de K₂NiF₄,
**caractérisée en ce que** le matériau oxydique présente une composition selon la formule Ln₂₋ₐAₐBO_{4-δ}, avec
Ln = élément de terres rares issu du groupe (La, Ce, Pr, Nd),
A = un alcalino-terreux issu du groupe (Ca, Sr),
B = métal de transition ou un mélange composé de métaux de transition, issu du groupe (Fe, Co, Mn) et 0 ≤ a < 1,6 et dans laquelle δ se définit par la valence des métaux.

2. Cathode selon la revendication 1 avec Ln = lanthane et A = strontium.

3. Cathode selon l'une quelconque des revendications 1 à 2, avec B = cobalt et 0,5 < a < 1,0.

4. Cathode selon la revendication 3, avec une composition selon la formule LaSrCoO_{4-δ}.

5. Cathode selon l'une quelconque des revendications 1 à 2, avec B = fer et 1,1 < a < 1,3.

6. Utilisation d'une cathode selon l'une quelconque des revendications 1 à 5 dans une pile à combustible à température élevée.
